(19) Europäisches Patentamt

European Patent Office

Office européen des brevets

(11) **EP 0 825 549 A2**

(12) **EUROPÄISCHE PATENTANMELDUNG**

(43) Veröffentlichungstag:
25.02.1998 Patentblatt 1998/09

(51) Int. Cl.$^6$: **G06K 13/02**

(21) Anmeldenummer: 97114455.5

(22) Anmeldetag: 21.08.1997

(84) Benannte Vertragsstaaten:
**AT BE CH DE DK ES FI FR GB GR IE IT LI LU MC NL PT SE**
Benannte Erstreckungsstaaten:
**AL LT LV RO SI**

(30) Priorität: 23.08.1996 DE 19634230

(71) Anmelder: **Kubat Mechanik GmbH**
**90542 Eckental (DE)**

(72) Erfinder:
• **Deuerlein, Werner**
91349 Egloffstein (DE)
• **Link, Günter**
91322 Gräfenberg (DE)

(74) Vertreter: **Gassner, Wolfgang**
**Bissel Salleck + Partner,**
**Nürnberger Strasse 69/71**
**91052 Erlangen (DE)**

(54) **Lese- und Schreibverfahren und -vorrichtung für Chipkarten**

(57) Die Erfindung betrifft Lese- und Schreibverfahren für Karten mit einem Mittel zum Speichern von Daten, insbesondere Chipkarten, wobei auf einem eine Mehrzahl n von Feldern 12 zur Aufnahme der Karten aufweisenden taktweise bewegbaren Aufnahmemittel 6 mindestens eine Prozeßrechnereinheit 23 vorgesehen ist, welche mit dem Mittel zum Speichern der auf dem Aufnahmemittel 6 abgelegten Karten zum Lesen und Schreiben von Daten verbunden wird.

Fig. 3

**Beschreibung**

Die Erfindung betrifft ein Lese- und Schreibverfahren sowie eine Lese- und Schreibvorrichtung für Karten mit einem Mittel zum Speichern von Daten, insbesondere Chipkarten.

Bei Chipkarten handelt es sich um Kunststoffkarten, in die ein Mikrochip eingearbeitet ist. Der Mikrochip ist mittels auf der Kartenoberfläche vorgesehener Kontaktfelder kontaktierbar. Durch eine Verbindung der Kontaktfelder mit einem Computer können Daten aus dem Mikrochip ausgelesen bzw. auf diesem gespeichert werden.

Solche Chipkarten finden insbesondere als Telefonkarten, Krankenkassenkarten, Scheckkarten und dgl. Anwendung. Dabei ist es bei bestimmten Anwendungsarten notwendig, daß auf den Mikrochip u.a. individuelle personenbezogene Daten geschrieben und gespeichert werden. Zu diesem Zweck werden die Chipkarten Vorrichtungen zugeführt, in denen die anwendungsspezifischen Daten und/oder Programme auf den Mikrochip geschrieben werden. Das Schreiben der Daten erfordert derzeit pro Karte etwa 20 Sekunden. Das macht es schwierig, eine Vorrichtung bereitzustellen, in der Chipkarten mit einer hohen Taktrate, d.h. mit Taktzeiten von weniger als 20 Sekunden, mit Daten beschreibbar sind.

Nach dem Stand der Technik ist ein Verfahren und eine Vorrichtung zur Durchführung des Verfahrens bekannt, bei dem eine Mehrzahl von Karten gleichzeitig auf einem Tisch abgelegt wird. Die abgelegten Karten werden gleichzeitig mittels einer Kontakteinheit kontaktiert. Sodann werden die erforderlichen Daten auf den Mikrochip geschrieben. - Der Nachteil dieses Verfahrens besteht darin, daß es eine hohe Taktzeit von mehr als 20 Sekunden aufweist. Des weiteren erfordert dieses Verfahren einen hohen apparativen Aufwand, um fehlerhaft programmierte Chipkarten zu vereinzeln, gegen eine Ersatzkarte auszutauschen und die Programmierung an der Ersatzkarte zu wiederholen.

Weiterhin ist nach dem Stand der Technik ein Verfahren bekannt, bei dem die zu programmierenden Chipkarten nacheinander auf einem eine Mehrzahl von Aufnahmefeldern aufweisenden Drehteller abgelegt werden. Der Drehteller dreht entsprechend einem vorgegebenen Takt um einen bestimmten Winkelbetrag, so daß eine darauf abgelegte Chipkarte nacheinander verschiedenen außerhalb des Drehtellers angeordneten Programmier- und Bearbeitungsstationen gegenüberliegt. Es sind insbesondere zwei Programmierstationen vorgesehen, bei denen die Chipkarte kontaktiert und programmiert wird. An der ersten Programmierstation wird die erste Hälfte der auf den Chip zu schreibenden Daten und an der zweiten Programmierstation die zweite Hälfte übertragen. Damit kann die Taktzeit einer Vorrichtung zur Durchführung dieses Verfahrens auf etwa 10 Sekunden reduziert werden. - Der Nachteil dieses Verfahrens besteht im wesentlichen darin, daß eine mehrfache Kontaktierung und Programmierung erforderlich ist, was die Wahrscheinlichkeit von Fehlprogrammierungen erhöht. Das die Taktrate bestimmende Element ist auch hier die Programmierstation.

Aufgabe der Erfindung ist es, die Nachteile nach dem Stand der Technik zu beseitigen. Insbesondere soll ein Verfahren sowie eine Vorrichtung angegeben werden, mit denen es möglich ist, die Taktzeiten zur Bearbeitung von Chipkarten zu verkürzen.

Diese Aufgabe wird durch die Merkmale des Patentanspruchs 1 gelöst. Zweckmäßige Weiterbildungen ergeben sich aus den Merkmalen der Ansprüche 2 bis 12. Vorrichtungsseitig wird die Aufgabe durch die Merkmale des Anspruchs 13 gelöst, wobei vorteilhafte Weiterbildungen in den Merkmalen der Ansprüche 13 bis 33 wiedergegeben sind.

Gemäß der Erfindung ist auf einem eine Mehrzahl n von Feldern zur Aufnahme der Karten aufweisenden taktweise bewegbaren Aufnahmemittel mindestens eine Prozeßrechnereinheit vorgesehen, welche mit dem Mittel zum Speichern der auf dem Aufnahmemittel aufgenommenen Karten zum Lesen und Schreiben von Daten verbunden wird.

Das Verbinden mindestens einer auf dem taktweise bewegbaren Aufnahmemittel angeordneten Prozeßrechnereinheit zum Lesen und Schreiben von Daten der darauf aufgenommenen Karten hat den Vorteil, daß die Taktrate nicht mehr durch die Programmierdauer einer relativ zum Aufnahmemittel feststehenden Programmierstation bzw. der Prozeßrechnereinheit bestimmt wird. Die auf dem Aufnahmemittel aufgenommenen Karten bleiben nahezu während ihrer gesamten Verweilzeit auf dem Aufnahmemittel mit der Prozeßrechnereinheit verbunden. Damit kann bsp. bei Verwendung eines zur Aufnahme von 16 Karten geeigneten Aufnahmemittels eine Taktzeit von etwa 1,8 Sekunden erreicht werden, d.h. jeweils nach 1,8 Sekunden wird eine programmierte Karte vom Aufnahmemittel entnommen und durch eine zu programmierende Karte ersetzt.

Vorteilhafterweise werden die Karten nacheinander in einer Ablege- und Entnahmeposition auf dem Aufnahmemittel, bei dem es sich vorzugsweise um einen Drehteller handelt, abgelegt. Zur weiteren Verkürzung der Taktzeit ist es aber auch denkbar, mehrere Ablege- und Entnahmepositionen vorzusehen.

Es wird als besonders vorteilhaft angesehen, daß mittels einer Einrichtung zum Kartentausch jeweils vor dem Ablegen einer Karte auf ein Feld eine andere Karte vom selben Feld entnommen wird. Durch den Austausch der bearbeiteten gegen eine unbearbeitete Karte an der Ablege- und Entnahmeposition wird apparativer Aufwand gespart. Bei der Einrichtung zum Kartentausch kann es sich um einen um 180° drehbaren Doppel-Drehhandler handeln. Das ermöglicht das separate Abführen fehlerhafter Karten.

Zweckmäßigerweise ist jedem Feld eine Prozeßrechnereinheit, und jeder Prozeßrechnereinheit ein Kontaktelement zugeordnet. Bei einem Aufnahmemittel mit 16 Feldern sind demnach 16 mit Kontaktelementen versehene Prozeßrechnereinheiten auf dem Aufnahmemittel angebracht. Damit kann eine besonders hohe Flexibilität des Verfahrens erzielt werden. So können bsp. Karten mit verschiedenartigen Mitteln zum Speichern, insbesondere unterschiedlich konzipierten Chips, gleichzeitig programmiert werden.

Nach einem weiteren verfahrensmäßigen Ausgestaltungsmerkmal wird der Drehteller nach dem Ablegen einer Karte um einen Winkelbetrag $\gamma 1$ gegenüber der Ablege- und Entnahmeposition rotiert, der durch die folgende Beziehung definiert ist:

$$\gamma 1 = 360° / n$$

Nach dem Rotieren um den Winkelbetrag $\gamma 1$ kann ein mit der Prozeßrechnereinheit verbundenes Kontaktelement geschlossen werden, so daß das Mittel zum Speichern mit der Prozeßrechnereinheit zum Lesen und Schreiben von Daten verbunden ist. Zweckmäßigerweise wird der Drehteller nach dem Schließen des Kontaktelements bis zu einem Winkelbetrag $\gamma 2$ gegenüber der Ablege- und Entnahmeposition rotiert, der durch die folgende Beziehung definiert ist:

$$\gamma 2 = (n-1) * 360/ n$$

Nach dem Rotieren um den Winkelbetrag $\gamma 2$ kann sodann das geschlossene Kontaktelement wieder geöffnet werden, so daß das Mittel zum Speichern von der Prozeßrechnereinheit getrennt wird. - Die beschriebene Verfahrensausgestaltung ermöglicht es, daß die Karten für eine maximale Zeitdauer während der Umdrehungsdauer des Drehtellers mit der Prozeßrechnereinheit verbunden bleiben. - Sofern zwei, bsp. um 180° versetzte Aufgabe- und Entnahmepostionen, vorgesehen sind, ändern sich die obigen Beziehungen dementsprechend.

Vorteilhafterweise wird nach dem Schließen des Kontaktelements das Mittel zum Speichern bezüglich seiner Lese- und Schreibfähigkeit geprüft. Falls die Lese- oder Schreibfähigkeit des Mittels zum Speichern mangelhaft ist, kann der Drehteller um den Winkelbetrag $\gamma 1$ zurückrotiert werden. Eine Karte, deren Mittel zum Speichern eine mangelhaftes Lese- oder Schreibfähigkeit aufweist, kann dann mittels des Doppel-Handlers gegen die nächstfolgende Karte ausgetauscht werden. - Das ermöglicht einen schnellen und problemlosen Austausch mangelhafter Karten. Bemerkenswert dabei ist, daß während des Austauschs mangelhafter Karten, die auf dem Drehteller aufgenommenen Karten mit der Prozeßrechnereinheit verbunden bleiben und programmiert werden können.

Nach Maßgabe der vorrichtungseitigen Lösung der Aufgabe ist auf einem eine Mehrzahl n von Feldern zur Aufnahme der Karten aufweisenden taktweise bewegbaren Aufnahmemittel mindestens eine Prozeßrechnereinheit vorgesehen, welche mit dem Mittel zum Speichern der auf dem Aufnahmemittel aufgenommenen Karten zum Lesen und Schreiben von Daten verbindbar ist. - Damit gelingt es, die Vorrichtung mit einer Taktrate zu betreiben, die von der für das Lesen und Schreiben von Daten auf die Karten notwendigen Zeitdauer unabhängig ist.

Als besonders vorteilhaft hat es sich erwiesen, die Prozeßrechnereinheit mit einer Hauptprozeßrechnereinheit zu verbinden. Das ermöglicht es, die Prozeßrechnereinheit klein und platzsparend auszubilden.

Zweckmäßigerweise weist die Verbindung zwischen der Hauptprozeßrechnereinheit und der Prozeßrechnereinheit mindestens eine Datenleitung auf, die abgeschirmt sein kann. In die Datenleitung kann mindestens ein Schleifkontakt eingeschaltet sein. Damit gelingt es auf einfache Weise, die drehbare Prozeßrechnereinheit mit der Hauptprozeßrechnereinheit zu verbinden. In die Leitungen zur Spannungsversorgung der Prozeßrechnereinheit können gleichfalls Schleifkontakte eingeschaltet sein.

Die Datenleitung kann als Ringleitung ausgebildet sein, d.h. es führt ein erster Ast von der Hauptprozeßrechnereinheit zur Prozeßrechnereinheit und ein zweiter Ast von der Prozeßrechnereinheit zur Hauptprozeßrechnereinheit. In diesem Fall sind in die Datenleitung vorzugsweise ein erster und ein zweiter Schleifkontakt eingeschaltet, so daß ein Datenleitungsabschnitt gebildet ist, dessen eines Ende mit dem ersten Schleifkontakt und dessen anderes Ende mit dem zweiten Schleifkontakt verbunden ist.

Als besonders vorteilhaft wird angesehen, eine Mehrzahl von Prozeßrechnereinheiten auf dem Aufnahmemittel vorzusehen, wobei jedem Feld eine Prozeßrechnereinheit zugeordnet sein kann. - Die Prozeßrechnereinheiten können über den Datenleitungsabschnitt miteinander verbunden sein. Die verbunden Prozeßrechnereinheiten bilden zweckmäßigerweise zusammen mit der Hauptprozeßrechnereinheit ein Netzwerk. Somit können die Prozeßrechnereinheit schnell und problemlos auf Datensätze zurückgreifen, die in einer bsp. von der Hauptprozeßrechnereinheit zur Verfügung gestellten Daten abgelegt sind. Gerade die Verwendung einer Mehrzahl von Prozeßrechnereinheiten ermöglicht ein Höchstmaß an Flexibilität; es können Karten mit unterschiedlichen Mitteln zum Speichern gleichzeitig bearbeitet werden. Als Mittel zum Speichern kommen neben Chips auch Magnetstreifen in Betracht. Es ist denkbar, sowohl einen auf einer Karte vorgesehenen Magnetstreifen als auch auf einen zusätzlich eingearbeiteten Chip gleichzeitig Daten zu schreiben.

Das Aufnahmemittel ist zweckmäßigerweise ein Drehteller. Die Felder können jeweils eine mit der Form der Karte korrespondierende Ausnehmung aufweisen, wobei die Ausnehmung einen, vorzugsweise als Schlitz ausgebildeten, Durchbruch aufweisen kann. Somit wird die auf dem Drehteller abgelegte Karte fest an Ort und Stelle gehalten. Der Schlitz dient dazu, einen an der Rückseite der Karte möglicherweise vorgesehenen Magnetstreifen zugänglich zu machen. Außerdem wird durch den Durchbruch ein Adhäsion der Karte in der Ausnehmung vermieden, so daß diese problemlos entnommen werden kann.

Nach einem weiteren Ausgestaltungsmerkmal ist jedem Feld ein mit der Prozeßrechnereinheit verbundenes Kontaktelement zugeordnet, wobei das Kontaktelement eine Mehrzahl von federvorgespannten Kontaktstiften aufweisen kann. Das Kontaktelement ist zweckmäßigerweise in Richtung des Felds bewegbar, so daß die Kontaktstifte mit am Mittel zum Speichern vorgesehenen Kontaktfeldern einer im Feld aufgenommenen Karte in Kontakt kommen. Das Kontaktelement weist insbesondere ein elastisches Mittel, vorzugsweise eine Feder, auf, durch welches das Kontaktelement in die eine geöffnete Position gezwungen wird, in der die Kontaktstifte mit den Kontaktfeldern außer Kontakt sind. Des weiteren hat es sich als günstig erwiesen, daß das Kontaktelement eine entriegelbare Rastvorrichtung aufweist, durch welche das Kontaktelement in einer geschlossenen Position gehalten wird, in der die Kontaktstifte mit den Kontaktfeldern in Kontakt sind. Durch die geschilderte Ausgestaltung des Kontaktelements kann dieses einfach durch einen pneumatisch hin- und herbewegbaren Stempel einer außerhalb des Drehtellers angeordneten Schließvorrichtung durch Niederdrücken in die Raststellung geschlossen werden. Das Öffnen erfordert dagegen lediglich eine Bewegung eines an der Rastvorrichtung vorgesehenen Hebels, durch den die Rastvorrichtung entriegelt werden kann.

Der Schleifkontakt kann einen an einer feststehenden Säule vorgesehenen Kontaktring und eine am Drehteller befestigten mit dem Schleifring in Kontakt stehenden Schleiffeder aufweisen. Zweckmäßigerweise ragt die Säule durch einen zentralen im Drehteller vorgesehenen Durchbruch. Insbesondere bei einer als Ringleitung ausgebildeten Datenleitung können sechs Schleifkontakte vorgesehen sein, wobei zwei Schleifkontakte Leitungen zur Stromversorgung der mindestens einen auf dem Drehteller angeordneten Prozeßrechnereinheit, und je zwei Schleifkontakte eine Datenleitung mit Abschirmung verbinden. Die Schleifkontakte können von einem Abschirmungsgehäuse umgeben sein.

In der Zeichnung ist ein bevorzugtes Ausführungsbeispiel der Erfindung dargestellt. Es zeigen

Fig.1    eine Draufsicht auf ein System zum Programmieren und Beschriften von Chipkarten,

Fig.2    eine vergrößerte Ansicht des in Fig. 1 gezeigten Drehtellers,

Fig.3    einen schematischen Querschnitt durch den Drehteller, und

Fig.4    eine vereinfachtes Blockschaltbild.

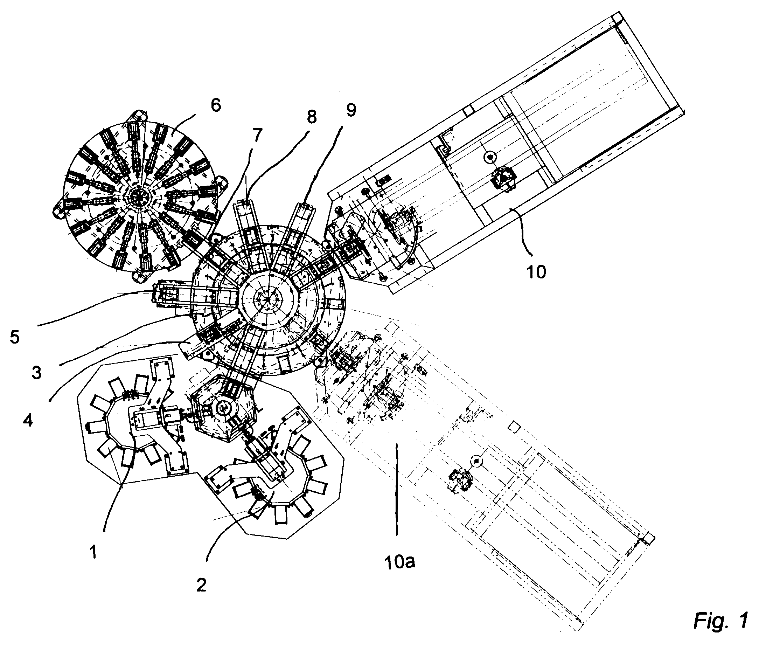

Fig.1 zeigt eine Draufsicht auf ein System zum Programmieren und Beschriften von Chipkarten. Das System besteht im wesentlichen aus einem Eingangsmagazin 1, einem Ausgangsmagazin 2, einem mit dem Ein- und Ausgangsmagazin 1 und 2 in Verbindung stehenden Transportteller 3, einer feststehenden Lesestation 4, einer feststehenden Lese- und Schreibstation 5 sowie einem Drehteller 6, der über einen 180° Doppel-Drehhandler 7 mit dem Transportteller 3 in Verbindung steht. In Drehrichtung des Transporttellers 3 ist weiterhin eine feststehende Kontroll/Lesestation 8, eine Auswurf- und Einschleusvorrichtung 9, ein erster Laser 10 zum Beschriften der Karten sowie optional ein zweiter Laser 10a vorgesehen.

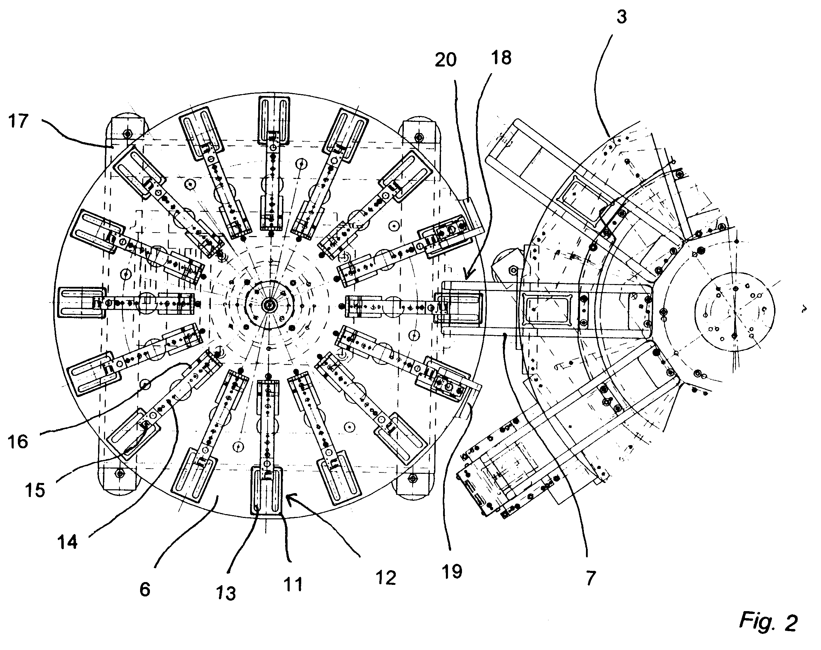

In Fig. 2 ist eine vergrößerte Ansicht des in Fig. 1 gezeigten Drehtellers 6 dargestellt. Der Drehteller 6 weist durch eine rechteckige Ausnehmungen 11 gebildete Felder 12 auf, die jeweils mit zwei radialen Schlitzen 13 versehen sind. Jedem Feld 12 ist ein Kontaktelement 14 zugeordnet, welches an seinem einen Ende mit Kontaktstiften 15 versehen ist. Das andere Ende des Kontaktelements 14 ist schwenkbar in einer Aufnahme 16 gehalten. Der Drehteller 6 ist drehbar auf einem Tisch 17 befestigt. Eine auf dem Drehteller 6 vorgesehene Ablege- und Entnahmeposition 18 befindet sich in der Nähe des Transporttellers 3, von dem die Karten mittels des 180° Doppel-Drehhandlers 7 an den Drehteller 6 übergeben werden. In Drehrichtung des Drehtellers 6 ist eine feststehende Schließvorrichtung 19 zum Schließen der Kontaktelemente 14 angebracht. Entgegen der Drehrichtung des Drehtellers 6 befindet sich neben der Ablege- und Entnahmeposition 18 eine korrespondierende Öffnungsvorrichtung 20 zum Öffnen der Kontaktelemente 14.

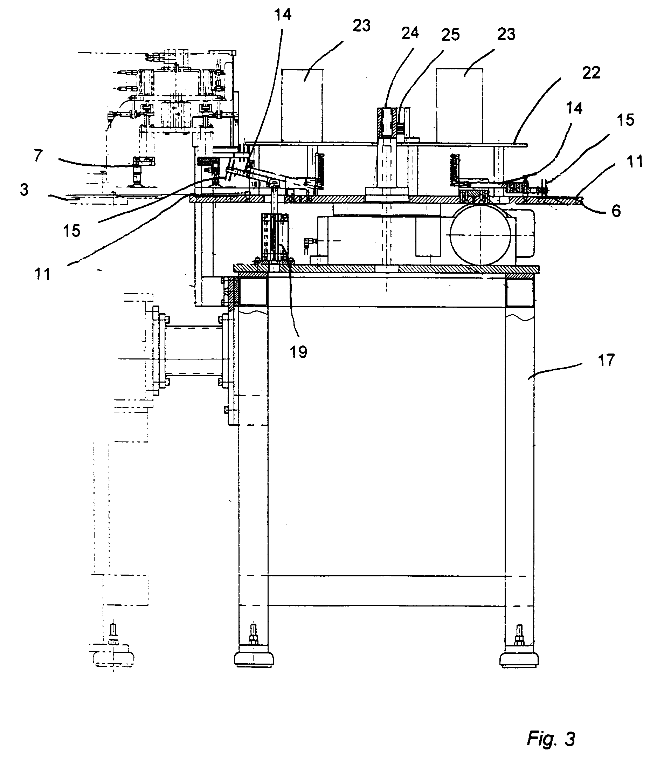

In Fig. 3 ist einen schematischer Querschnitt durch den Drehteller 6 gezeigt. Erkennbar sind zwei Kontaktelemente 14, wobei das eine in geschlossener und das andere in geöffneter Stellung gezeigt ist. Im hier dargestellten Ausführungsbeispiel wird das Kontaktelement 14 durch eine Feder 21 in eine geschlossenen Position gezwungen. Es ist aber auch möglich die Feder 21 so anzubringen, daß das Kontaktelement 14 in die geöffnete Position gezwungen wird.

Auf dem Drehteller 3 ist eine Ringplatte 22 befestigt, auf der Prozeßrechnereinheiten 23 angebracht sind, wobei je eine Prozeßrechnereinheit 23 mit einem Kontaktelement 14 in Verbindung steht (hier nicht gezeigt). Eine fest mit dem Tisch 17 verbundene Säule 24 weist mehrere Schleifkontakte 25 auf.

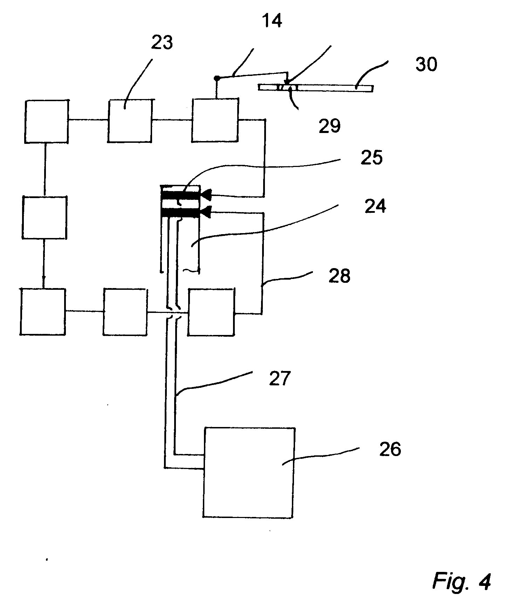

In Fig. 4 ist anhand eines stark vereinfachten Blockschaltbilds die Verbindung der Prozeßrechnerheiten 23 untereinander sowie mit einer Hautprozeßrechnereinheit 26 gezeigt. Die Hauptprozeßrechnereinheit 26 ist über eine Ringleitung 27 mit den Prozeßrechnereinheiten 23 verbunden. Durch die Schleifkontakte 25 ist ein Datenleitungsabschnitt 28 gebildet, in den die Prozeßrechnereinheiten 23 eingeschaltet sind. Jede Prozeßrechnereinheit 23 ist über ein ihr zugeordnetes Kontaktelement 14 über daran vorgesehenen Kontaktstifte 15 mit einem Chip 29 einer Karte 30 kontaktierbar.

Die Funktion der Vorrichtung ist folgende:

Eine Karte 30 wird dem Eingangsmagazin 1 entnommen und auf den Transportteller 3 aufgelegt. Dort werden an der Lesestation 4 sowie an der Schreib/Lesestation 5 spezifische Daten über die Art des auf der Karte 30 befindlichen Chips 28 gelesen und an die Hauptprozeßrechnereinheit 26 zur Verarbeitung weitergegeben.

Nachfolgend wird die eine Karte vom Transportteller 3 mittels des 180° Doppel-Drehhandlers 7 aufgenommen. Gleichzeitig nimmt der 180° Doppel-Drehandler 7 eine in der gegenüberliegenden Position auf dem Drehteller 6 in einem Feld 12 abgelegte andere Karte auf. Sodann rotiert der 180° Doppel-Drehandler um 180°; die vom Transportteller 3 aufgenommene Karte wird auf das Feld 12 auf dem Drehteller 6 abgelegt, auf dem sich zuvor die andere Karte befunden hat.

Der Drehteller 6 rotiert dann um 22,5° im Uhrzeigersinn. Mittels der Schließvorrichtung 19 wird das Kontaktelement 14 mit dem auf der Karte 30 befindlichen Chip 29 in Kontakt gebracht. Nach dem Inkontaktbringen werden mittels der mit dem Kontaktelement 14 verbundenen Prozeßrechnereinheit 23 Daten auf den Chip 29 geschrieben bzw. von diesem gelesen. Der Datentransfer dauert an, bis der Drehteller um 237,5° gegenüber der Ablege- und Entnahmeposition 18 rotiert ist. In dieser Position wird die Datenübertragung gestoppt und das Kontaktelement 14 durch die Öffnungsvorrichtung 20 geöffnet.

Nach dem Öffnen des Konaktelements 14 erreicht die Karte 30 wieder die Ablege- und Entnahmeposition 18. Sie wird vom 180° Doppel-Drehhandler 7 aufgenommen und auf den Transportteller 3 zurückgesetzt. Die Karte 30 wird mit dem Laser 10 beschriftet und dann in das Ausgangsmagazin 2 befördert.

Bezugszeichenliste

| 1 | Eingangsmagazin |
|---|---|
| 2 | Ausgangsmagazin |
| 3 | Transportteller |
| 4 | Lesestation |
| 5 | Lese- und Schreibstation |
| 6 | Drehteller |
| 7 | 180° Doppel-Drehhandler |
| 8 | Kontroll/Lesestation |
| 9 | Auswurf- und Einschleusvorrichtung |
| 10 | erster Laser |
| 10a | zweiter Laser |
| 11 | Ausnehmung |
| 12 | Feld |
| 13 | Schlitz |
| 14 | Konaktelement |
| 15 | Konaktstift |
| 16 | Aufnahme |
| 17 | Tisch |
| 18 | Ablege- und Entnahmeposition |
| 19 | Schließvorrichtung |
| 20 | Öffnungsvorrichtung |
| 21 | Feder |
| 22 | Ringplatte |
| 23 | Prozeßrechnereinheit |
| 24 | Säule |
| 25 | Schleifkontakt |
| 26 | Hauptprozeßrechnereinheit |
| 27 | Ringleitung |
| 28 | Datenleitungsabschnitt |
| 29 | Chip |
| 30 | Karte |

**Patentansprüche**

1. Lese- und Schreibverfahren für Karten (30) mit einem Mittel zum Speichern (29) von Daten, insbesondere Chipkarten, wobei auf einem eine Mehrzahl n von Feldern (12) zur Aufnahme der Karten (30) aufweisenden taktweise bewegbaren Aufnahmemittel (6) mindestens eine Prozeßrechnereinheit (23) vorgesehen ist, welche mit dem Mittel zum Speichern (29) der auf dem Aufnahmemittel (6) aufgenommenen Karten (30) zum Lesen und Schreiben von Daten verbunden wird.

2. Lese- und Schreibverfahren nach Anspruch 1, wobei mittels einer Einrichtung zum Kartentausch jeweils vor dem Ablegen einer Karte (30) auf einem Feld (12) eine andere Karte vom selben Feld (12) entnommen wird.

3. Lese- und Schreibverfahren nach Anspruch 2, wobei die Einrichtung zum Kartentausch ein um 180° drehbaren Doppel-Handler (7) ist.

4. Lese- und Schreibverfahren nach einem der vorhergehenden Ansprüche, wobei jedem Feld (12) eine Prozeßrechnereinheit (23) und jeder Prozeßrechnereinheit (23) ein Kontaktelement (14) zugeordnet ist.

5. Lese- und Schreibverfahren nach einem der vorhergehenden Ansprüche, wobei das Aufnahmemittel (6) ein Drehteller ist.

6. Lese- und Schreibverfahren nach einem der vorhergehenden Ansprüche, wobei der Drehteller nach dem Ablegen einer Karte (30) um einen Winkelbetrag $\gamma1$ gegenüber der Ablege- und Entnahmeposition (18) rotiert wird, der durch die folgende Beziehung definiert ist:

$$\gamma1 = 360° / n$$

7. Lese- und Schreibverfahren nach einem der vorhergehenden Ansprüche, wobei nach dem Rotieren um den Winkelbetrag γ1 ein mit der Prozeßrechnereinheit (23) verbundenes Kontaktelement (14) geschlossen wird, so daß das Mittel zum Speichern (29) mit der Prozeßrechnereinheit (23) zum Lesen und Schreiben von Daten verbunden ist.

8. Lese- und Schreibverfahren nach einem der vorhergehenden Ansprüche, wobei der Drehteller nach dem Schließen des Kontaktelements (14) bis zu einem Winkelbetrag γ2 gegenüber der Ablege- und Entnahmeposition (18) rotiert wird, der durch die folgende Beziehung definiert ist:

$$\gamma2 = (n-1) * 360/ n$$

9. Lese- und Schreibverfahren nach einem der vorhergehenden Ansprüche, wobei nach dem Rotieren um den Winkelbetrag γ2 das geschlossene Kontaktelement (14) geöffnet wird, so daß das Mittel zum Speichern (29) von der Prozeßrechnereinheit (23) getrennt wird.

10. Lese- und Schreibverfahren nach einem der vorhergehenden Ansprüche, wobei nach dem Schließen des Kontaktelements (14) das Mittel zum Speichern (29) bezüglich seiner die Lese- und Schreibfähigkeit geprüft wird.

11. Lese- und Schreibverfahren nach einem der vorhergehenden Ansprüche, wobei der Drehteller (6) um den Winkelbetrag γ1 zurückrotiert wird, falls die Lese- oder Schreibfähigkeit des Mittels zum Speichern (29) mangelhaft ist.

12. Lese- und Schreibverfahren nach einem der vorhergehenden Ansprüche, wobei eine Karte, deren Mittel zum Speichern (29) eine mangelhaftes Lese- oder Schreibfähigkeit aufweist, gegen die nächstfolgende Karte (30) aus einer Zuführvorrichtung (3) ausgetauscht wird.

13. Lese- und Schreibvorrichtung für Karten (30) mit einem Mittel zum Speichern (29) von Daten, insbesondere Chipkarten, wobei auf einem eine Mehrzahl n von Feldern (12) zur Aufnahme der Karten (30) aufweisenden taktweise bewegbaren Aufnahmemittel (6) mindestens eine Prozeßrechnereinheit (23) vorgesehen ist, welche mit dem Mittel zum Speichern (29) der auf dem Aufnahmemittel (6) aufgenommenen Karten (30) zum Lesen und Schreiben von Daten verbindbar ist.

14. Lese- und Schreibvorrichtung nach Anspruch 13, wobei die Prozeßrechnereinheit (23) mit einer Hauptprozeßrechnereinheit (26) verbunden ist.

15. Lese- und Schreibvorrichtung nach Anspruch 14, wobei die Verbindung zwischen der Hauptprozeßrechnereinheit (26) und der Prozeßrechnereinheit (23) mindestens eine Datenleitung aufweist.

16. Lese- und Schreibvorrichtung nach Anspruch 15, wobei in die Datenleitung mindestens ein Schleifkontakt (25) eingeschaltet ist.

17. Lese- und Schreibvorrichtung nach einem der Ansprüche 15 oder 16, wobei die Datenleitung als Ringleitung (27) ausgebildet ist.

18. Lese- und Schreibvorrichtung nach Anspruch 17, wobei in die Datenleitung ein erster und ein zweiter Schleifkontakt eingeschaltet sind, so daß ein Datenleitungsabschnitt (28) gebildet ist, dessen eines Ende mit dem ersten Schleifkontakt und dessen anderes Ende mit dem zweiten Schleifkontakt verbunden ist.

19. Lese- und Schreibvorrichtung nach einem der Ansprüche 13 bis 18, wobei eine Mehrzahl von Prozeßrechnereinheiten (23) auf dem Aufnahmemittel (6) vorgesehen sind.

20. Lese- und Schreibvorrichtung nach einem der Ansprüche 13 bis 19, wobei jedem Feld (12) eine Prozeßrechnereinheit (23) zugeordnet ist.

21. Lese- und Schreibvorrichtung nach einem der Ansprüche 13 bis 20, wobei die Prozeßrechnereinheiten (23) über den Datenleitungsabschnitt (28) miteinander verbunden sind.

22. Lese- und Schreibvorrichtung nach einem der Ansprüche 13 bis 21, wobei jedem Feld (12) ein mit der Prozeßrechnereinheit (23) verbundenes Kontaktelement (14) zugeordnet ist.

23. Lese- und Schreibvorrichtung nach Anspruch 22, wobei das Kontaktelement (14) eine Mehrzahl von federvorgespannten Kontaktstiften (15) aufweist.

24. Lese- und Schreibvorrichtung nach Anspruch 22 oder 23, wobei das Kontaktelement (14) in Richtung des Felds (12) bewegbar ist, so daß die Kontaktstifte (15) mit am Mittel zum Speichern (29) vorgesehenen Kontaktfeldern einer im Feld (12) aufgenommen Karte (30) in Kontakt bringbar ist.

25. Lese- und Schreibvorrichtung nach einem der Ansprüche 22 bis 24, wobei das Kontaktelement (14) ein elastisches Mittel, vorzugsweise eine Feder (21), aufweist, durch welches das Kontaktelement (14) in die eine geöffnete Position gezwungen wird, in der die Kontaktstifte (15) mit den Kontaktfeldern außer Kontakt sind.

26. Lese- und Schreibvorrichtung nach einem der Ansprüche 22 bis 25, wobei das Kontaktelement (14) eine entriegelbare Rastvorrichtung aufweist, durch welche das Kontaktelement (14) in einer geschlossenen Position gehalten wird, in der die Kontaktstifte (15) mit den Kontaktfeldern in Kontakt sind.

27. Lese- und Schreibvorrichtung nach einem der Ansprüche 13 bis 26, wobei die Felder (12) jeweils eine mit der Form der Karte (30) korrespondierende Ausnehmung (11) aufweisen.

28. Lese- und Schreibvorrichtung nach Anspruch 27, wobei die Ausnehmung einen, vorzugsweise als Schlitz (13) ausgebildeten, Durchbruch aufweist.

29. Lese- und Schreibvorrichtung nach einem der Ansprüche 13 bis 28, wobei die Aufnahmevorrichtung (6) ein Drehteller ist.

30. Lese- und Schreibvorrichtung nach einem der Ansprüche 13 bis 29, wobei der Schleifkontakt (25) einen an einer feststehenden Säule (24) vorgesehenen Kontaktring und eine am Drehteller (6) befestigte mit dem Schleifring in Kontakt stehenden Schleiffeder aufweist.

31. Lese- und Schreibvorrichtung nach einem der Ansprüche 13 bis 30, wobei eine Einrichtung zum Kartentausch vorgesehen ist, mittels der jeweils vor dem Ablegen einer Karte (30) auf einem Feld (12) eine andere Karte vom selben Feld (12) entnehmbar ist.

32. Lese- und Schreibvorrichtung nach einem der Ansprüche 13 bis 31, wobei die Einrichtung zum Kartentausch ein um 180° drehbarer Doppel-Handler (7) ist.

33. Lese- und Schreibvorrichtung nach einem der Ansprüche 13 bis 32, wobei die Einrichtung zum Kartentausch zwischen dem Drehteller und einem Transportteller (3) angeordnet ist.

EP 0 825 549 A2

*Fig. 1*

Fig. 2

*Fig. 3*

*Fig. 4*

EP 0 825 549 A2